(19) Europäisches Patentamt
European Patent Office
Office européen des brevets

(11) **EP 2 050 221 B1**

(12) **FASCICULE DE BREVET EUROPEEN**

(45) Date de publication et mention
de la délivrance du brevet:
**18.05.2011 Bulletin 2011/20**

(21) Numéro de dépôt: **07823400.2**

(22) Date de dépôt: **07.08.2007**

(51) Int Cl.:
**H04L 9/06** (2006.01)

(86) Numéro de dépôt international:
**PCT/FR2007/001348**

(87) Numéro de publication internationale:
**WO 2008/023107 (28.02.2008 Gazette 2008/09)**

(54) **PROCEDE DE VERIFICATION DE L'INTEGRITE D'UNE CLEF DE CHIFFREMENT OBTENUE PAR COMBINAISON DE PARTIES DE CLEF**

VERFAHREN ZUR ÜBERPRÜFUNG DER INTEGRITÄT EINES VERSCHLÜSSELUNGSSCHLÜSSELS DURCH KOMBINATION VON SCHLÜSSELTEILEN

METHOD OF VERIFYING THE INTEGRITY OF AN ENCRYPTION KEY OBTAINED BY COMBINING KEY PARTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **09.08.2006 FR 0607232**

(43) Date de publication de la demande:
**22.04.2009 Bulletin 2009/17**

(73) Titulaire: **Morpho**
**75015 Paris (FR)**

(72) Inventeur: **PELLETIER, Hervé**
**F-95280 Jouy Le Moutier (FR)**

(74) Mandataire: **Lavialle, Bruno François Stéphane et al**
**Cabinet Boettcher**
**16, rue Médéric**
**75017 Paris (FR)**

(56) Documents cités:
**WO-A-01/82525**       **CA-A1- 2 327 037**
**US-A1- 2004 019 782**

**Description**

La présente invention concerne un procédé de vérification de l'intégrité d'une clef de chiffrement obtenue par combinaison de parties de clef et utilisée en relation avec un algorithme de chiffrement symétrique.

ARRIERE PLAN DE L'INVENTION

On sait qu'un algorithme de chiffrement fonctionne au moyen d'une clef qui est un élément essentiel pour assurer la sécurité du chiffrement.

Différents moyens sont connus pour tenter d'obtenir frauduleusement la clef associée à un algorithme de chiffrement. L'un de ces moyens consiste à analyser des phénomènes électriques ou électromagnétiques se produisant lors du transfert de la clé depuis une mémoire morte de stockage vers une mémoire vive ou depuis la mémoire vive vers un registre. Pour lutter contre ce mode de fraude, il est connu de diviser la clef en plusieurs parties, généralement deux parties, qui sont combinées au moyen d'un opérateur, par exemple l'opérateur commutatif OU EXCLUSIF, dans une zone protégée en lecture dans laquelle l'algorithme est mis en oeuvre.

Un autre moyen de reconstituer la clef consiste à provoquer des perturbations sur la clef et à analyser les conséquences sur le chiffrement d'une donnée qui est utilisée de façon répétitive en provoquant des perturbations successives de la clef de chiffrement. Pour empêcher un fraudeur d'effectuer des perturbations successives de la clef il serait souhaitable de vérifier l'intégrité de la clef lors d'une mise en oeuvre de l'algorithme de chiffrement. Or, la combinaison de parties de clef dans une zone protégée non accessible en lecture interdit toute relecture de la clef pour vérifier son intégrité.

Il est connu de l'état de l'art, par exemple du document CA2327037 une méthode pour détecter les attaques par faute contre les algorithmes de chiffrement. Ladite méthode comprenant une étape d'initialisation au cours de laquelle un vecteur d'initialisation et une clé sont fournies pour calculer au moins une sous clé. Une fonction de somme de contrôle est appliquée sur le vecteur d'initialisation et la sous-clé, cette somme de contrôle est enregistré pour des vérifications ultérieures.

Lors d'un calcul de chiffrement sur tin message, le calcul de la somme de contrôle est répété. Une attaque est alors détectée lorsque le résultat obtenu est différent de celui stocké.

Le document US200401 9782 décrit lui aussi un procédé de vérification de l'intégrité d'un message chiffré mettant en oeuvre des fonction de somme de contrôle.

OBJET DE L'INVENTION

Un but de l'invention est de proposer un procédé permettant de vérifier l'intégrité d'une clef de chiffrement obtenue par une combinaison dans une zone protégée de plusieurs parties de clef en utilisant un opérateur commutatif en relation avec un algorithme de chiffrement symétrique.

RESUME DE L'INVENTION

En vue de la réalisation de ce but, on propose selon l'invention un procédé comportant les étapes d'effectuer au moyen de l'opérateur commutatif une première combinaison entre une partie de clef et une clef de chiffrement de vérification, effectuer successivement au moyen de l'opérateur commutatif une combinaison entre une partie de clef non encore combinée et un résultat d'une combinaison immédiatement précédente jusqu'à une dernière combinaison comprenant toutes les parties de clef, effectuer dans la zone protégée une combinaison entre la clef de chiffrement à vérifier et la dernière combinaison de la clef de chiffrement de vérification avec les parties de clef pour obtenir une clef finale de vérification, effectuer un chiffrement d'une donnée de vérification au moyen d'un algorithme de chiffrement symétrique en utilisant la clef finale de vérification et comparer avec un chiffrement de vérification obtenu par un chiffrement direct de la donnée de vérification au moyen de la clef de chiffrement de vérification.

Ainsi, lorsque la clef à vérifier n'a pas été perturbée, la clef finale de vérification est équivalente à la clef de chiffrement de vérification et le chiffrement de la donnée de vérification est alors identique au chiffrement de vérification. Au contraire, si la clef de chiffrement a été perturbée, la clef finale de vérification n'est pas équivalente à la clef de chiffrement de vérification et une différence est détectée entre le chiffrement de la donnée de vérification et le chiffrement de vérification. Il est alors possible d'en tirer des conséquences, par exemple un blocage de l'algorithme de chiffrement afin d'empêcher un fraudeur de poursuivre la succession de tests lui permettant de reconstituer la clef de chiffrement.

De préférence, au moins une des combinaisons précédant la dernière combinaison entre les parties de clef et la clef de chiffrement de vérification est effectuée en dehors de la zone protégée. On minimise ainsi les moyens qui doivent être mis en oeuvre dans la zone protégée.

BREVE DESCRIPTION DES DESSINS

D'autres caractéristiques et avantages de l'invention apparaîtront à la lecture de la description qui suit d'un mode de réalisation préféré non limitatif de l'invention en référence à la figure ci-jointe qui illustre de façon schématique le procédé selon l'invention.

DESCRIPTION DETAILLEE DE L'INVENTION

En référence à la figure, le procédé selon l'invention est mis en oeuvre en utilisant des moyens connus en soi comprenant une mémoire statique 1 telle qu'une EEPROM, une mémoire vive 2 et un registre 3 formant une zone protégée en lecture configuré pour mettre en oeuvre un algorithme de chiffrement symétrique (DES, TDES, AES...) utilisant une clef de chiffrement K. De façon connue en soi, la clef de chiffrement K est obtenue par combinaison de deux parties de clef KM et M en utilisant un opérateur commutatif tel qu'un OU EXCLUSIF qui, dans les équations qui suivent sera noté (+).

A cet effet les valeurs de clef KM et M sont lues à partir de la mémoire statique dans la mémoire vive puis transférées à la zone protégée 3 dans laquelle elles sont combinées selon l'équation K = KM (+) M. On rappelle que la clef K ne peut pas être lue dans la zone protégée 3.

Selon l'invention, la mémoire statique 1 contient également une clef de chiffrement de vérification Kv, une donnée de vérification Dv et un chiffrement de vérification Cv, le chiffrement de vérification Cv ayant été obtenu par un chiffrement direct de la donnée de vérification par l'algorithme de chiffrement en utilisant la clef de chiffrement de vérification. En utilisant un algorithme DES on a donc Cv = DES(Kv,Dv).

Pour provoquer une perturbation de la clef K, il est possible pour un fraudeur d'intervenir sur les parties de clef KM et/ou M lorsque celles-ci sont dans la mémoire statique ou dans la mémoire vive.

Afin de vérifier l'intégrité de la clef de chiffrement K contenue dans le registre 3, le procédé selon l'invention comporte les étapes de :

- effectuer dans la mémoire vive 2 une combinaison entre la clef de chiffrement de vérification Kv et une première partie de clef KM. On obtient ainsi :

$$T = KM \ (+) \ Kv$$

- effectuer une deuxième combinaison entre le résultat de la combinaison précédemment obtenu et la seconde partie de clef M. Dans le mode de mise en oeuvre décrit, on obtient ainsi une dernière combinaison Mv donnée par l'équation :

$$Mv = T(+)M$$

- combiner la combinaison de vérification Mv dans la zone protégée 3 avec la clef de chiffrement K pour obtenir une clef finale de vérification Kf donnée par l'équation :

$$Kf = K \ (+) \ Mv$$

- effectuer un chiffrement de la donnée de vérification Dv au moyen de l'algorithme de chiffrement symétrique DES en utilisant la clef finale de vérification Kf pour obtenir un chiffrement de donnée de vérification CDv tel que CDv = DES (Kf, Dv).
- comparer le chiffrement de données de vérification CDv obtenu avec le chiffrement de vérification Cv extrait de la mémoire statique 1.

On notera que si l'on développe la formule de la clef finale de vérification on obtient :

$$Kf = K \ (+) \ KM \ (+) \ Kv \ (+) \ M$$

soit en tenant compte de la commutativité de l'opérateur OU EXCLUSIF :

$$\text{Kf} = \text{K} (+) \text{KM} (+) \text{M} (+) \text{Kv}$$

Si les données de départ n'ont pas fait l'objet d'une attaque on a :

$$\text{KM} (+) \text{M} = \text{K}$$

et l'expression de Kf devient :

$$\text{Kf} = \text{K} (+) \text{K} (+) \text{Kv} = \text{Kv}.$$

Si au contraire l'une des données a été perturbée, il n'y a plus d'identité entre K et KM (+) M de sorte que la clef finale de vérification Kf est alors différente de la clef de chiffrement de vérification Kv. Le chiffrement de la donnée de vérification Dv avec la clef de chiffrement finale de vérification Kf donne alors un résultat CDv différent du chiffrement de vérification Cv.

La comparaison de CDv et Cv permet donc de détecter une attaque et de déclencher une action défensive, par exemple un blocage de l'algorithme.

On notera que le procédé selon l'invention permet non seulement de vérifier l'intégrité de la clef de chiffrement K, mais également de vérifier lorsqu'une attaque a été effectuée sur la clef de chiffrement de vérification Kv, la donnée de vérification Dv ou le chiffrement de vérification Cv.

Bien que la détection d'une attaque sur ces données ne soit pas le but premier de l'invention, elle permet néanmoins de réagir afin d'éviter que l'attaque porte ensuite sur les données relatives aux parties de clef KM ou M.

Bien entendu, l'invention n'est pas limitée au mode de mise en oeuvre décrit et on peut y apporter des variantes de réalisation sans sortir du cadre de l'invention tel que défini par les revendications.

En particulier, bien que l'invention ait été décrite avec une clef en deux parties seulement, le procédé selon l'invention peut s'appliquer à une clef recombinée à partir d'un nombre quelconque de parties de clef en utilisant un opérateur commutatif et un algorithme de chiffrement symétrique.

Bien que les étapes de combinaison des parties de clef de chiffrement KM et M avec la clef de vérification Kv aient été prévues d'être réalisées dans la mémoire vive 2, on peut également les réaliser dans la zone protégée 3 mais on monopolise alors inutilement les ressources de calcul de la zone protégée 3.

## Revendications

1. Procédé de vérification de l'intégrité d'une clef de chiffrement (K) obtenue par une combinaison dans une zone protégée (3) d'au moins deux parties de clefs (KM, M) en utilisant un opérateur commutatif, **caractérisé en ce qu'**il comporte les étapes d'effectuer au moyen de l'opérateur commutatif une première combinaison entre une partie de clef (KM) et une clef de chiffrement de vérification (Kv), effectuer successivement au moyen de l'opérateur commutatif une combinaison entre une partie de clef non encore combinée et un résultat d'une combinaison immédiatement précédente jusqu'à une dernière combinaison (Mv) comprenant toutes les parties de clef, effectuer dans la zone protégée (3) une combinaison entre la clef de chiffrement (K) à vérifier et la dernière combinaison (Mv) de la clef de chiffrement de vérification (Kv) avec les parties de clef (KM, M) pour obtenir une clef finale de vérification (Kf), effectuer un chiffrement d'une donnée de vérification (Dv) au moyen d'un algorithme de chiffrement symétrique (DES) en utilisant la clef finale de vérification (Kf), et comparer avec un chiffrement de vérification (Cv) obtenu par un chiffrement direct de la donnée de vérification (Dv) au moyen de la clef de chiffrement de vérification (Kv).

2. Procédé selon la revendication 1, **caractérisé en ce qu'**au moins une des combinaisons précédant la dernière combinaison (Mv) entre les parties de clef (KM, M) et la clef de vérification (Kv) est effectuée en dehors de la zone protégée (3).

## Claims

1. A method of verifying the integrity of an encryption key (K) obtained by combining at least two key portions (KM, M) in a protected zone (3) by using a commutative operator, the method being **characterized in that** it comprises the steps of: using the commutative operator to perform a first combination between a key portion (KM) and a verification encryption key (Kv), using the commutative operator to perform in succession a combination between a key portion that has not yet been combined and a result obtained by an immediately preceding combination, until a last combination (Mv) is performed that includes all of the key portions; performing a combination in the protected zone (3) between the encryption key (K) to be verified and the last combination (Mv) of the verification encryption key (Kv) and the key portions (KM, M) in order to obtain a final verification key (Kf); encrypting verification data (Dv) by means of a symmetrical encryption algorithm (DES) using the final verification key (Kf); and making a comparison with a verification encryption (Cv) obtained by direct encryption of the verification data (Dv) by means of the verification encryption key (Kv).

2. A method according to claim 1, **characterized in that** at least one of the combinations preceding the last combination (Mv) between the key portions (KM, M) and the verification key (Kv) is performed outside the protected zone (3).

**Patentansprüche**

1. Verfahren zur Überprüfung der Integrität eines Verschlüsselungsschlüssels (K), der durch eine Verknüpfung von mindestens zwei Schlüsselabschnitten (KM, M) in einem geschützten Bereich (3) unter Verwendung eines kommutativen Operators erhalten wird, **dadurch gekennzeichnet, dass** es die Schritte umfasst: Ausführen einer ersten Verknüpfung zwischen einem Schlüsselabschnitt (KM) und einem Überprüfungs-Verschlüsselungsschlüssel (Kv) mit Hilfe des kommutativen Operators, sukzessives Ausführen einer Verknüpfung zwischen einem noch nicht verknüpften Schlüsselabschnitt und einem Ergebnis einer unmittelbar vorausgehenden Verknüpfung mit Hilfe des kommutativen Operators bis zu einer letzten Verknüpfung (Mv), die alle Schlüsselabschnitte enthält, Ausführen einer Verknüpfung zwischen dem zu überprüfenden Verschlüsselungsschlüssel (K) und der letzten Verknüpfung (Mv) des Überprüfungs-Verschlüsselungsschlüssels (Kv) mit den Schlüsselabschnitten (KM, M) in dem geschützten Bereich (3), um einen endgültigen Überprüfungsschlüssel (Kf) zu erhalten, Ausführen einer Verschlüsselung eines Überprüfungsdatums (Dv) mit Hilfe eines symmetrischen Verschlüsselungsalgorithmus (DES) unter Verwendung des endgültigen Überprüfungsschlüssels (Kf) und Vergleichen mit einer Überprüfungsverschlüsselung (Cv), die durch eine direkte Verschlüsselung des Überprüfungsdatums (Dv) mit Hilfe des Überprüfungs-Verschlüsselungsschlüssels (Kv) erhalten wird.

2. Verfahren nach Anspruch 1, **dadurch gekennzeichnet, dass** mindestens eine der Verknüpfungen, die der letzten Verknüpfung (Mv) zwischen den Schlüsselabschnitten (KM, M) und dem Überprüfungsschlüssel (Kv) vorausgeht, außerhalb des geschützten Bereichs (3) erfolgt.

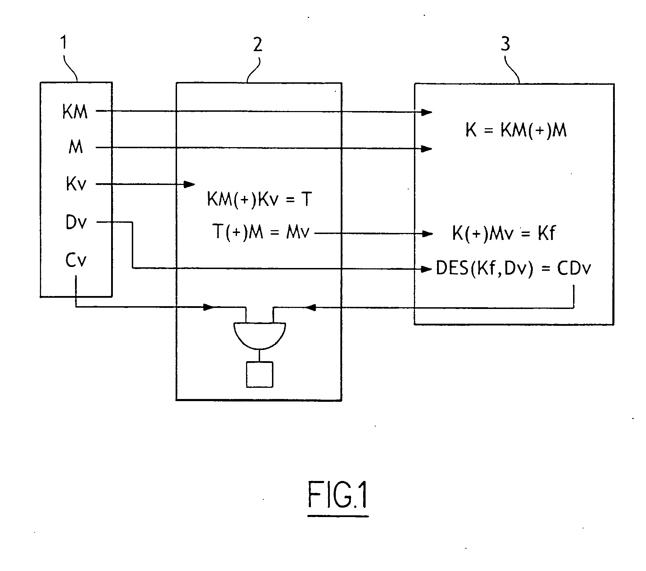

FIG.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2327037
- US 2004019782 A